# EUROPÄISCHE PATENTSCHRIFT

(11) **EP 4 317 031 B1**
(45) Veröffentlichungstag und Bekanntmachung des Hinweises auf die Patenterteilung: **22.07.2026**
(21) Anmeldenummer: 23168732.8
(22) Anmeldetag: 19.04.2023
(51) Int. Cl.: B65G 21/20

(54) **VERSTELLEINRICHTUNG FÜR GASSENWÄNDE**
ADJUSTING DEVICE FOR GAS-BARRIERS
DISPOSITIF DE RÉGLAGE POUR PAROIS DE SÉPARATION DE GAZ

(30) Priorität: 01.08.2022 DE 102022119226
(43) Veröffentlichungstag der Anmeldung: 07.02.2024
(73) Patentinhaber: Krones Aktiengesellschaft, 93073 Neutraubling (DE)
(72) Erfinder: WILLNHAMMER, Stefan, 93073 Neutraubling (DE)
(74) Vertreter: Benninger, Johannes

(56) Entgegenhaltungen:
- US-A1- 2017 283 176
- US-B2- 10 358 295
- US-B2- 11 001 451

## Beschreibung

Die vorliegende Erfindung betrifft eine Verstelleinrichtung für Gassenwände, eine Transportstrecke mit einer solchen Verstelleinrichtung sowie ein Verfahren zum Anpassen mindestens einer zur Führung von Artikeln vorgesehenen Gasse.

In der Automatisierungstechnik, wo mit einer Vielzahl beispielsweise gleichartiger Artikel umgegangen werden muss, werden die Artikel häufig in einem Artikelstrom einem vorzunehmenden Umgang zugeführt oder von einem vorgenommenen Umgang abtransportiert.

Um innerhalb möglichst kurzer Zeit mit möglichst vielen Artikeln umzugehen, ist es bekannt, die Artikel in mehreren durch seitliche Begrenzungen in ihrer Weite an die Breite der Artikel angepassten, parallel verlaufenden Gassen geführten Artikelströmen zu transportieren.

Durch DE 33 36 988 C2 ist eine Transportvorrichtung mit mehreren parallel verlaufenden Gassen bekannt. Jede Gasse verfügt über eine durch ein eigenes Förderband gebildete Transportspur.

Die US 11,001,451 B2 offenbart eine Transporteinrichtung gemäss dem Oberbegriff des Anspruchs 1 mit einem Rahmen und einem Endlosband. Wenn die Transporteinrichtung gewartet werden soll, werden Führungsschienen über Hebearme angehoben.

Die US 2017/0283176 A1 offenbart eine Vorrichtung zum Fördern von Produkten. Bestandteil der Vorrichtung sind mehrere Führungsschienen, die auf und ab bewegt werden können, um die Position auf die Geometrie jeweiliger zu bewegender Produkte abzustimmen.

Die US 10,358,295 B2 betrifft einen Transportabschnitt mit bewegbaren Führungsschienen, um ein jeweiliges Produkt von einem Zulauf an einen Auslauf zu verbringen. Sofern ein jeweiliges Produkt eine große Länge besitzt, können Führungsschienen abgesenkt werden.

Durch DE 202 08 127 U1 ist eine Transportvorrichtung mit einem über deren Gesamtbreite durchgängigen Förderband und mehreren parallel verlaufenden Gassen bekannt. Das Förderband ist über Gassenbleche in mehrere jeweils eine Transportspur einer Gasse bildende Förderbandpartien unterteilt. Ein mittleres Gassenblech ist unverrückbar an quer zu den Transportspuren oberhalb des Förderbands verlaufenden Traversen befestigt. Die verbleibenden Gassenbleche sind quer zu den Transportspuren entlang der Traversen verschiebbar angeordnet.

Durch EP 2 159 173 B1 ist eine Transportvorrichtung mit mehreren parallel verlaufenden Gassenpaaren bekannt. Jedes Gassenpaar verfügt über zwei durch jeweils ein eigenes Förderband gebildete Transportspuren. Zwischen den Förderbändern eines jeden Gassenpaars kann ein Unterteilungsblech parallel zu den Gassenblechen verlaufen und gemeinsam mit jeweils einem zweiten der beiden Förderbänder eines Gassenpaars ebenfalls quer zur Transportvorrichtung verstellbar angeordnet werden. Hierdurch kann ein Gassenpaar in zwei gleich oder unterschiedlich breite Einzelgassen unterteilt werden. Darüber hinaus ist es durch Entfernung des Unterteilungsblechs möglich, ein oder alle Gassenpaare an den Transport überbreiter Artikel anzupassen.

Sofern in aufeinanderfolgenden Prozessen Artikel mit unterschiedlichen Höhen transportiert werden sollen, müssen Gassenbleche ggf. ausgetauscht werden, damit sich ein jeweiliges Gassenblech zur Führung eines jeweiligen Artikels mit einer bestimmten Höhe eignet. In der Praxis wird ein solcher Austausch händisch vorgenommen.

Auch kann es für diverse Prozesse notwendig sein, dass Gassenbleche vollständig aus einem Transportabschnitt entfernt werden. Beispielsweise können in einem ersten Prozess Artikel in einem sogenannten ungeordneten Massenstrom transportiert werden, bei welchem keine Einteilung oder Ausrichtung von Artikeln erfolgt ist und Artikel eine willkürliche Orientierung zueinander besitzen. Nachfolgend kann es wünschenswert sein, dass Artikel in mehreren parallelen Reihen entlang des Transportabschnittes bewegt werden, um Artikel in dieser Anordnung an einen nachfolgenden Verpackungsprozess weiterzuleiten. Je nach Prozess ist es hierbei notwendig, dass sich Gassenbleche im Transportabschnitt befinden oder eben auch nicht. Eine solche Entnahme von Gassenblechen aus dem Transportabschnitt und ein solches Einbringen von Gassenblechen in den Transportabschnitt erfolgt in der Regel händisch, wozu Fixierungen zunächst gelöst werden und das jeweilige Gassenblech aus dem Transportabschnitt genommen wird.

Mit steigendem Grad der Automatisierung wäre es wünschenswert, wenn die genannten Anpassungen/Modifikationen schnell, einfach und mit reduziertem personellem Einsatz vorgenommen werden können.

Eine Aufgabe der Erfindung kann somit darin gesehen werden, eine Entwicklung bereitzustellen, welche einen höheren Automatisierungsgrad ermöglicht.

Die Erfindung betrifft eine Verstelleinrichtung mit mehreren Gassen zur jeweiligen Führung von Artikeln gemäss dem unabhängigen Anspruch 1.

Bei den Artikeln kann es sich beispielsweise um Getränkebehälter und hierbei insbesondere um Gebinde mit jeweils mehreren Getränkebehältern, um einzelne Getränkeflaschen und/oder um einzelne Getränkedosen handeln.

Es ist vorgesehen, dass die Verstelleinrichtung einen Verstellmechanismus umfasst, der zum wahlweisen Übertragen einer Hebe- oder Senkbewegung auf mindestens eine Gassenwand betätigbar ist. Indem die mindestens eine Gassenwand über den Verstellmechanismus einer erfindungsgemäßen Transportstrecke wahlweise angehoben oder abgesenkt werden kann, ist es nicht mehr notwendig, die mindestens eine Gassenwand manuell an unterschiedliche Artikelhöhen anzupassen.

Erfindungsgemäß ist auch vorgesehen, dass die mindestens eine Gassenwand durch eine Hebebewegung auf ein Höhenniveau gebracht wird, bei dem sich die mindestens eine Gassenwand ausschließlich oberhalb von Artikeln befindet, wenn Artikel entlang des Transportabschnittes bewegt werden. Hierdurch kann die mindestens eine Gassenwand auf einfache Art und Weise in eine Speicherposition überführt werden, wenn die mindestens eine Gassenwand in einem bestimmten Prozess nicht zur Führung von Artikeln benötigt wird.

Ebenso wird erfindunsgemäß durch ein Absenken der mindestens einen Gassenwand ermöglicht, dass diese aus der vorhergehend beschriebenen Speicherposition in eine Arbeitsposition gebracht wird, in welcher die mindestens eine Gassenwand Artikel führt, wenn Artikel entlang des Transportabschnittes bewegt werden. Auch hierzu ist kein manuelles Eingreifen notwendig, da der Verstellmechanismus wahlweise eine Hebe- oder Senkbewegung auf die mindestens eine Gassenwand überträgt.

Erfindunsgemäß umfasst die Verstelleinrichtung einen Verstellmechanismus, der zum wahlweisen Übertragen einer Hebe- oder Senkbewegung auf mehrere Gassenwände betätigbar ist.

Es kann sein, dass der Verstellmechanismus zum wahlweisen Übertragen der Hebe- oder Senkbewegung wenigstens eine Stange aufweist, die mit der mindestens einen Gassenwand verbindbar ist. Weiter kann der Verstellmechanismus eine Antriebswelle umfassen, welche mit der wenigstens einen Stange derart mechanisch zusammenwirkt, dass die wenigstens eine Stange bei einer drehenden Bewegung der Antriebswelle entlang ihrer Längsachse versetzt wird. Beispielsweise kann es sein, dass die Antriebswelle mindestens ein Reibrad rotierend antreibt, welches mit der wenigstens einen Stange in Oberflächenkontakt steht und die wenigstens eine Stange entlang ihrer Längsachse versetzt, wenn die Antriebswelle drehend bewegt wird. Bewährt haben sich Ausführungsformen, bei welchen die wenigstens eine Stange durch wenigstens eine Zahnstange ausgebildet ist. Die Antriebswelle kann mindestens eine Gegenverzahnung ausbilden und/oder mindestens eine Gegenverzahnung rotierend antreiben, welche mindestens eine Gegenverzahnung mit der wenigstens einen Zahnstange kämmend in Eingriff steht.

Die Verstelleinrichtung kann einen Aktor und ein Untersetzungsgetriebe umfassen, wobei der Aktor zur drehenden Bewegung der Antriebswelle mit dem Untersetzungsgetriebe zusammenwirkt. Hierdurch kann eine sehr präzise Übertragung einer Hebe- oder Senkbewegung auf mindestens eine Gassenwand bewirkt werden. Zudem kann der Aktor eine vergleichsweise geringe Leistung besitzen und die Verstelleinrichtung kostenoptimiert aufgebaut werden.

Auch kann es sein, dass die Verstelleinrichtung einen weiteren Verstellmechanismus und mehrere Stangen aufweist, wobei eine relative Beabstandung der mehreren Stangen entlang einer Längsrichtung der Antriebswelle durch eine Betätigung des weiteren Verstellmechanismus anpassbar ist. Bei solchen Ausführungsformen kann die Breite einer jeweiligen Gasse auf unkomplizierte Art und Weise angepasst werden. Hierdurch wird der Automatisierungsgrad bei einer Anpassung einer jeweiligen Gasse zusätzlich erhöht.

Die mehreren Stangen können durch mehrere Zahnstangen ausgebildet sein. Zudem kann die Verstelleinrichtung mehrere drehfest auf der Antriebswelle aufsitzende Zahnräder besitzen, wobei ein jeweiliges Zahnrad eine korrespondierende Gegenverzahnung ausbildet, mit welcher das jeweilige Zahnrad mit einer zugeordneten Zahnstange kämmend in Eingriff steht.

Die mehreren Zahnräder können derart auf der Antriebswelle aufsitzen, dass die mehreren Zahnräder bei einem Anpassen der relativen Beabstandung der mehreren Zahnstangen zusammen mit den mehreren Zahnstangen entlang der Längsrichtung der Antriebswelle bewegbar sind. Somit kann es sein, dass die mehreren Zahnräder derart auf der Antriebswelle aufsitzen, dass die mehreren Zahnräder jeweils in axialer Richtung entlang der Antriebswelle, auf welcher die mehreren Zahnräder aufsitzen, verschoben werden können.

Die Verstelleinrichtung kann mehrere Schlitten umfassen, wobei über einen jeweiligen Schlitten eine jeweilige Zahnstange und ein jeweiliges Zahnrad gehalten werden. Zudem kann die Verstelleinrichtung eine Linearführung umfassen, entlang welcher die mehreren Schlitten mittels einer Betätigung des weiteren Verstellmechanismus verschiebbar sind.

Denkbar ist, dass ein erster Schlitten ein erstes Gewinde bzw. ein erstes Innengewinde mit einer ersten Drehrichtung und ein zweiter Schlitten ein zweites Gewinde bzw. ein zweites Innengewinde mit einer zweiten Drehrichtung ausbildet. Das erste Gewinde bzw. das erste Innengewinde kann hierbei als rechtsdrehendes Gewinde bzw. als rechtsdrehendes Innengewinde ausgebildet sein. Das zweite Gewinde bzw. das zweite Innengewinde kann hierbei als linksdrehendes Gewinde bzw. als linksdrehendes Innengewinde ausgebildet sein. Zudem kann die Verstelleinrichtung eine Betätigungswelle besitzen, die über ein korrespondierendes Außengewinde in das erste Gewinde bzw. das erste Innengewinde und in das zweite Gewinde bzw. das zweite Innengewinde jeweils eingreift. Wird die Betätigungswelle gedreht, so werden der erste Schlitten und der zweite Schlitten relativ zueinander entlang der Linearführung bewegt, da das erste Gewinde und das zweite Gewinde unterschiedliche Drehrichtungen besitzen. Hierdurch wird der relative Abstand zwischen dem ersten Schlitten und dem zweiten Schlitten entweder vergrößert oder verkleinert.

Die Verstelleinrichtung kann zudem mehrere dritte Schlitten umfassen, die sich zwischen dem ersten Schlitten und dem zweiten Schlitten befinden. Zudem kann die Verstelleinrichtung eine Gelenkkette mit mehreren Scherenhebeln umfassen, wobei der erste Schlitten, der zweite Schlitten und die dritten Schlitten über die Gelenkkette mit mehreren Scherenhebeln miteinander verbunden sind.

Wenn der erste Schlitten und der zweite Schlitten entlang der Linearführung relativ zueinander bewegt werden, werden ebenso die dritten Schlitten relativ zueinander bewegt, da die dritten Schlitten über die Gelenkkette mit mehreren Scherenhebeln mit dem ersten Schlitten und dem zweiten Schlitten verbunden sind. Relative Beabstandungen zwischen unterschiedlichen Schlittenpaaren können hierbei identisch gehalten werden. Bei einer solchen Verstellung können Gassenwände auf einfache Art und Weise verstellt werden, wobei hierdurch mehrere Gassen mit identischer Gassenbreite entstehen.

Die Erfindung betrifft zudem die Verwendung einer Verstelleinrichtung gemäß einem Ausführungsbeispiel der voranstehenden Beschreibung für einen Artikelzulauf, für den in einem ersten Betriebsmodus eine Bewegung von Artikeln ohne eine Führung über Gassenwände und in einem zweiten Betriebsmodus eine Bewegung von Artikeln unter Führung über Gassenwände vorgesehen ist. Durch die mittels der Verstelleinrichtung mögliche Hebe- oder Senkbewegung für die mindestens eine Gassenwand ist es möglich, den Artikelzulauf auf einfache Art und Weise vom ersten Betriebsmodus in den zweiten Betriebsmodus sowie vom zweiten Betriebsmodus in den ersten Betriebsmodus zu überführen.

Es kann sein, dass die Transportstrecke mindestens zwei Verstelleinrichtungen umfasst, welche mit einer jeweiligen Gassenwand zusammenwirken, so dass die Verstellmechanismen der mindestens zwei Verstelleinrichtungen zum wahlweisen Übertragen einer Hebe- oder Senkbewegung auf die jeweilige Gassenwand gemeinsam betätigbar sind. Jede Verstelleinrichtung kann hierbei über einen Aktor verfügen, über welchen die jeweilige Verstelleinrichtung ihren jeweiligen Verstellmechanismus betätigen kann. Die Transportstrecke kann über eine Steuerungseinrichtung verfügen, über welche die Akoren der Verstelleinrichtungen zur Betätigung des jeweiligen Verstellmechanismus aufeinander abgestimmt ansteuerbar sind.

Die Erfindung betrifft zudem ein Verfahren zum Umgang mit mindestens einer zur Führung von Artikeln vorgesehenen Gasse gemäss Anspruch 7.

Merkmale, welche vorhergehend bereits zu diversen Ausführungsformen der Transportstrecke genannt wurden, können ebenso bei den nachfolgend beschriebenen Ausführungsformen des Verfahrens vorgesehen sein, ohne erneut erwähnt zu werden. Ebenso können die nachfolgend zu den Ausführungsformen des Verfahrens beschriebenen Merkmale bei den vorhergehend bereits beschriebenen Ausführungsformen der Transportstrecke vorgesehen sein, ohne erneut erwähnt zu werden. Die Transportstrecke können zur Durchführung der nachfolgend beschriebenen Ausführungsformen des erfindungsgemäßen Verfahrens vorbereitet oder hierzu konfiguriert bzw. ausgebildet sein.

Bei dem Verfahren ist vorgesehen, dass zum Umgang mit der Gasse ein Verstellmechanismus einer Verstelleinrichtung betätigt wird, woraus resultierend wenigstens eine Gassenwand der mindestens einen Gasse wahlweise angehoben oder abgesenkt wird.

Der Verstellmechanismus kann wenigstens eine Stange umfassen, welche mit der wenigstens einen Gassenwand verbunden ist sowie eine Antriebswelle, die gedreht wird und mit der Stange mechanisch zusammenwirkt, so dass in Abhängigkeit der jeweiligen Drehrichtung die wenigstens eine Gassenwand über die wenigstens eine Stange entweder angehoben oder abgesenkt wird.

Es kann sein, dass der Verstellmechanismus mehrere Stangen besitzt, von denen eine jeweilige Stange mit einer eigenen Gassenwand verbunden ist. Zudem kann die Verstelleinrichtung einen weiteren Verstellmechanismus ausbilden, der betätigt wird, wodurch eine relative Beabstandung der mehreren Stangen sowie der mit den mehreren Stangen verbundenen Gassenwände entlang einer Längsrichtung der Antriebswelle wahlweise verkleinert oder vergrößert wird. Eine jeweilige Stange kann über einen jeweiligen Schlitten gehalten sein, wobei die Schlitten zur Vergrößerung oder Verkleinerung des relativen Abstandes der mehreren Stangen entlang einer Linearführung bewegt werden.

Insbesondere kann es sein, dass die mehreren Stangen durch mehrere Zahnstangen ausgebildet sind und dass mehrere Zahnräder vorgesehen sind, die drehfest auf der Antriebswelle aufsitzen und jeweils eine Gegenverzahnung ausbilden, die mit einer Verzahnung einer dem jeweiligen Zahnrad zugeordneten Zahnstange kämmend in Eingriff steht. Bei dem Verfahren können die mehreren Zahnräder bei einer Anpassung der relativen Beabstandung der mehreren Zahnstangen sowie der mit den mehreren Zahnstangen verbundenen Gassenwände zusammen mit den mehreren Zahnstangen und den mit den mehreren Zahnstangen verbundenen Gassenwänden entlang der Längsrichtung der Antriebswelle verschoben werden. Die mehreren Zahnräder können hierbei über die vorherig bereits erwähnten Schlitten gehalten sein bzw. ein jeweiliges Zahnrad kann durch einen jeweiligen vorherig bereits erwähnten Schlitten aufgenommen sein.

Die wenigstens eine Gassenwand ist als Bestandteil einer Transportstrecke ausgebildet. Hierbei wechselt die Transportstrecke aus einem ersten Betriebsmodus in einen zweiten Betriebsmodus, wozu die wenigstens eine Gassenwand über den Verstellmechanismus der Verstelleinrichtung angehoben wird, worauf folgend Artikel entlang der Transportstrecke bewegt werden und die Gassenwand sich hierbei ohne Führung der Artikel oberhalb der Artikel befindet. Weiter wechselt die Transportstrecke aus dem zweiten Betriebsmodus in den ersten Betriebsmodus zurück, wozu die wenigstens eine Gassenwand über den Verstellmechanismus der Verstelleinrichtung abgesenkt wird, worauf folgend Artikel entlang der Transportstrecke bewegt und hierbei über die wenigstens eine abgesenkte Gassenwand geführt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische sowie perspektivische Vorderansicht einer Ausführungsform einer nicht erfindungsgemäßen Verstelleinrichtung.
Fig. 2 zeigt in perspektivischer Ansicht einzelne Details einer nicht erfinderischen Ausführungsform einer Verstelleinrichtung nach Fig. 1.
Fig. 3 zeigt eine schematische sowie perspektivische Rückansicht der Ausführungsform einer nicht erfindungsgemäßen Verstelleinrichtung nach Figuren 1 und 2.
Fig. 4 zeigt einzelne weitere Details der Verstelleinrichtung gemäß der Ausführungsform nach Figuren 1 bis 3.
Fig. 5 zeigt im Flussdiagramm mehrere Schritte, wie sie einzeln oder gemäß der in Fig. 5 dargestellten Kombination und Reihenfolge bei diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Es sei an dieser Stelle ausdrücklich erwähnt, dass alle Aspekte und Ausführungsvarianten, die im Zusammenhang mit der lediglich beispielhaften, jedoch nicht erfindungsgemäßen Verstelleinrichtung und der erfindungsgemäßen Transportstrecke erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur Verstelleinrichtung oder zur erfindungsgemäßen Transportstrecke von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die in Zusammenhang mit dem erfindungsgemäßen Verfahren erläutert wurden, gleichermaßen Teilaspekte der Verstelleinrichtung oder der erfindungsgemäßen Transportstrecke betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Transportstrecke.

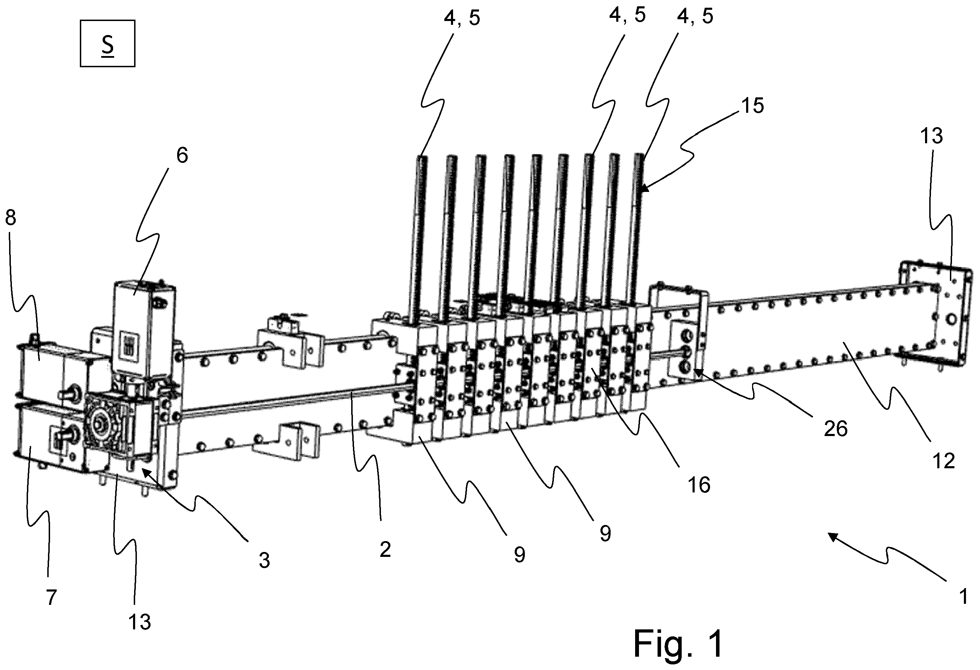

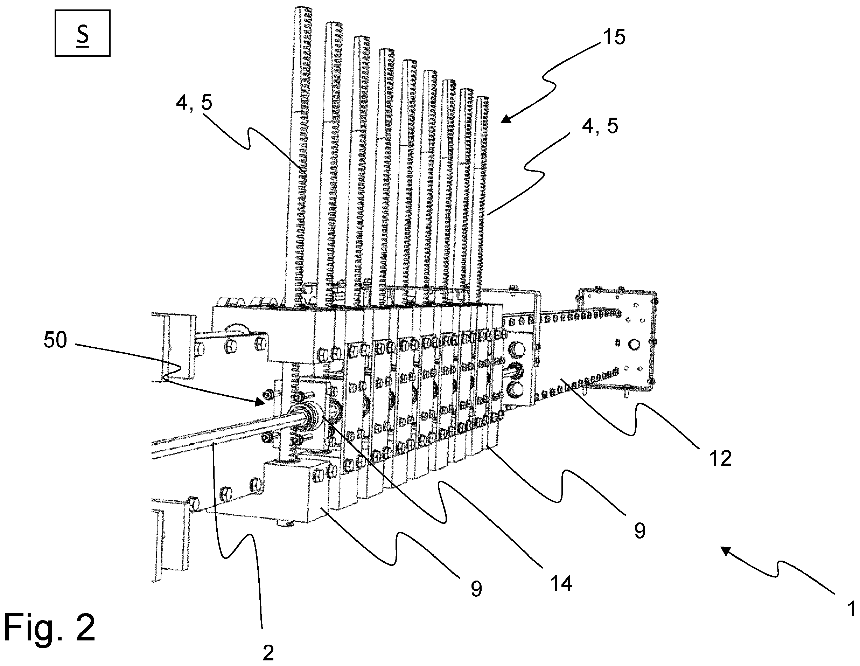

In der perspektivischen Darstellung nach Fig. 1 sowie in der weiteren perspektivischen Darstellung nach Fig. 2, welche einzelne Details in vergrößerter Darstellung zeigt, ist jeweils eine Verstelleinrichtung 1 zu erkennen. Mittels der Verstelleinrichtung 1 können Gassenwände, die zur Führung von Artikeln ausgebildet sind, wahlweise angehoben und abgesenkt werden.

Wie es Fig. 1 erkennen lässt, bildet die Verstelleinrichtung 1 an ihren stirnseitigen Endbereich jeweils ein Befestigungselement 13 aus, über das die Verstelleinrichtung 1 an einer rahmenartigen Stützkonstruktion festgesetzt werden kann. Wenn in der Praxis Artikel bzw. Getränkebehälter entlang einer Transportstrecke bewegt und während der Bewegung manipuliert werden sollen, sind hierzu in der Regel einzelne Module hintereinander aufgestellt. Solche Module verfügen über eine Rahmenkonstruktion, welche die Peripherie eines jeweiligen Moduls festlegen kann. Über die Befestigungselemente 13 kann die Verstelleinrichtung an einer solchen Rahmenkonstruktion festgesetzt werden, wozu ggf. Schraubverbindungen oder weitere Befestigungsmittel vorgesehen sein können, mit welchen die Verstelleinrichtung 1 stabil an der Rahmenkonstruktion gehalten wird.

Mit dem in Fig. 1 linksseitig dargestellten Befestigungsmittel 13 sind zudem drei Aktoren 6, 7 und 8 verbunden, deren jeweiliges Funktionsprinzip nachfolgend noch erläutert wird. Die Aktoren 6, 7 und 8 können über die Steuerungseinrichtung S betätigt werden, bei welcher es sich in der Regel um ein rechnergestützes System handelt, das mit den Aktoren 6, 7 und 8 kabellos oder auch kabelgebunden kommunizieren kann.

Bei aus dem Stand der Technik bekannten Transportstrecken ist es in der Praxis häufig der Fall, dass in aufeinanderfolgenden Prozessen unterschiedliche Artikel oder Getränkebehälter entlang der Transportstrecke bewegt werden sollen. Für einige Artikel kann es erforderlich sein, dass die Artikel hierbei in Gassen geführt und über Gassenwände gestützt werden. Dies verhindert einerseits, dass die jeweiligen Artikel während der Bewegung kippen, da eine relative Beabstandung jeweils zweier Gassenwände etwas mehr als dem maximalen Durchmesser des jeweiligen zu bewegenden Artikels entspricht.

Zudem kann eine Führung von Artikeln in parallelen Gassen dann sinnvoll oder sogar notwendig sein, wenn nachfolgende Verpackungsmaschinen oder Manipulatoren auf den Umfang mit Artikeln abgestimmt sind, welche die Verpackungsmaschine oder den Manipulator in parallelen Reihen erreichen. Bei anderen Prozessen kann es hingegen notwendig oder auch sinnvoll sein, wenn Artikel bzw. Getränkebehälter ohne eine entsprechende Führung über Gassenwände entlang der Transportstrecke bewegt werden. Eine solche Bewegung von Artikeln ohne eine Führung über Gassenwände wird in der Praxis als ungeordneter Massenstrom bezeichnet. Artikel bzw. Getränkebehälter werden hierbei ungeordnet und ohne eine entsprechende Einteilung in Gassen entlang der Transportstrecke bewegt.

Um eine Transportstrecke an solche unterschiedlichen Bedürfnisse anzupassen, werden Gassenwände aus dem Bereich der Transportstrecke genommen, sofern Artikel ohne Gassen entlang der Transportstrecke bewegt werden sollen. Ist es in einem nachfolgenden Prozess erforderlich, dass Artikel in parallelen Reihen bewegt und über Gassenwände geführt werden, so werden die Gassenwände wiederum händisch in die Transportstrecke eingebracht und durch entsprechende Fixierungen im Bereich der Transportstrecke festgesetzt.

Die Verstelleinrichtung 1 ermöglicht vorteilhafterweise, dass ein solches händisches Einsetzen von Gassenwänden in die Transportstrecke entfallen kann und führt zu einem hohen Automatisierungsgrad einer Transportstrecke bei einer notwendigen Anpassung der Transportstrecke an unterschiedliche Arten von Artikelbewegungen. Die Verstelleinrichtung 1 nach Fig. 1 kann somit als Bestandteil einer Transportstrecke ausgebildet sein. Um eine jeweilige Anpassung der Transportstrecke vorzunehmen, besitzt die Verstelleinrichtung 1 mehrere Stangen 4, die vorliegend durch Zahnstangen 5 ausgebildet sind. Jede dieser Stangen 4 bzw. Zahnstangen 5 besitzt ein in Richtung nach unten weisendes Ende, an dem eine jeweilige Gassenwand angeordnet werden kann. Die Gassenwände sind aus Gründen der Übersichtlichkeit in den Figuren jeweils nicht dargestellt. Bei einer Gassenwand kann es sich um ein Blech handeln, das entlang einer Transportrichtung von Artikeln verläuft.

Wird der Aktor 6 mittels der Steuerungseinrichtung S betätigt, so übertragt der Aktor 6 über ein Untersetzungsgetriebe 3 eine Drehbewegung auf die Antriebswelle 2. Jede Zahnstange 5 bilde eine Verzahnung 15 aus (vgl. Fig. 2), die mit einer korrespondierenden Gegenverzahnung der Antriebswelle 2 kämmend in Eingriff steht. Wird die Antriebswelle 2 über den Aktor 6 gedreht, so bewirkt dies in Abhängigkeit der jeweiligen Drehrichtung entweder, dass die Zahnstangen 5 bei einer ersten Drehrichtung nach oben bewegt werden oder dass die Zahnstangen 5 bei einer entgegengerichteten zweiten Drehrichtung der Antriebswelle 2 in Richtung nach unten bewegt werden. In Fig. 1 sind die Stangen 4 bzw. Zahnstangen 5 vollständig oder beinahe vollständig in Richtung nach oben bewegt. In dieser Position sind Gassenwände in einer Speicherposition, in der sie Artikel nicht führen, wenn Artikel entlang einer Transportstrecke bewegt werden.

Da sich an den Enden der Zahnstangen 5 Gassenwände befinden, führt eine entsprechende Bewegung der Zahnstangen 5 in Richtung nach oben dazu, dass die Gassenwände angehoben werden. Sofern die Zahnstangen 5 bei einer Drehbewegung der Antriebswelle 2 hingegen in Richtung nach unten bewegt werden, führt dies wiederum dazu, dass die Gassenwände abgesenkt werden. Wie vorhergehend erwähnt, ist in Figuren 1 und 2 jeweils eine Position der Zahnstangen 5 dargestellt, bei welcher nicht mit dargestellte Gassenwände bereits angehoben wurden und eine Endlage erreicht haben.

Da sämtliche Zahnstangen 5 mit einer entsprechenden Gegenverzahnung der einen Antriebswelle 2 kämmend in Eingriff stehen, werden sämtliche Zahnstangen 5 gemeinsam bewegt, wenn die Antriebswelle 2 gedreht wird. Hierdurch können zeitsynchron sämtliche Gassensände, die mit den Zahnstangen 5 in Verbindung stehen, zeitgleich angehoben oder abgesenkt werden. Der Übertragungsmechanismus besitzt zudem einen unkomplizierten Aufbau, da lediglich eine Antriebswelle 2 benötigt wird, um sämtliche Zahnstangen 5 bewegen zu können.

Die Figuren 1 und 2 verdeutlichen weiter, dass jeder Zahnstange 5 ein eigener Schlitten 9 zugeordnet ist, über den die jeweilige Zahnstange 5 gehalten wird bzw. über den die jeweilige Zahnstange 5 in axialer Richtung beweglich gelagert wird. Jedem Schlitten 9 ist zudem ein Verschlussdeckel 16 zugeordnet, der einen unbeabsichtigten Eingriff eines Benutzers in den Schlitten 9 verhindert und hierbei das Risiko einer Verletzung reduziert. Der Verschlussdeckel 16 kann entfernt werden, sofern einzelne Komponenten beschädigt sind oder die Verstelleinrichtung 1 gewartet werden soll.

In diversen Ausführungsformen kann es sein, dass die Antriebswelle 2 über den größten Teil ihrer Längserstreckung selbst eine Gegenverzahnung ausbildet, mit welcher die Antriebswelle 2 mit der Verzahnung 15 der Zahnstangen 5 kämmend in Eingriff steht. Auch Reibräder sind denkbar, welche auf der Antriebswelle 2 drehfest aufsitzen und hierbei eine Drehbewegung auf eine lineare Stellbewegung einer jeweiligen Stange 4 übertragen. Bei solchen Ausführungsformen müssen die Stangen 4 keine Verzahnung 15 besitzen.

Bei der in den Figuren 1 bis 4 dargestellten Ausführungsform einer Verstelleinrichtung 1 ist jedoch vorgesehen, dass auf der Antriebswelle 2 mehrere Zahnräder 14 (vgl. Fig. 2) aufsitzen, wobei ein jeweiliges Zahnrad 14 über eine jeweilige Gegenverzahnung mit einer jeweiligen Zahnstange 5 kämmend in Eingriff steht. Ein jeweiliges Zahnrad 14 sitzt hierbei drehfest auf der Antriebswelle 2 auf. Um die drehfeste Verbindung zwischen Antriebswelle 2 und Zahnrad 14 auf möglichst einfache Art und Weise ausbilden zu können, ist die Antriebswelle als Außensechskant ausgebildet, der formschlüssig in einen Innensechskant eines jeweiligen Zahnrades 14 eingreift.

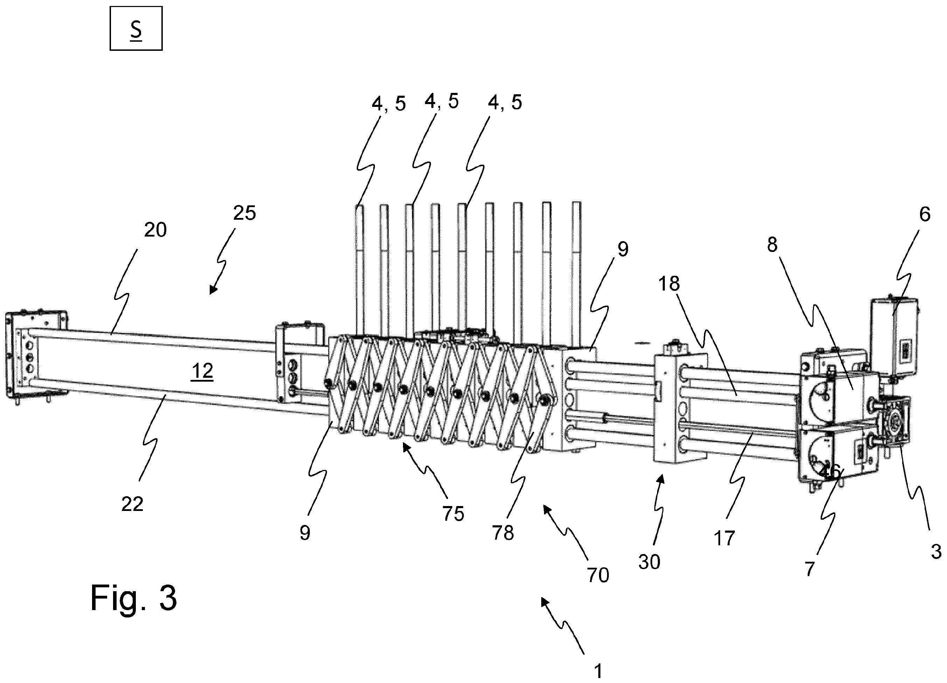

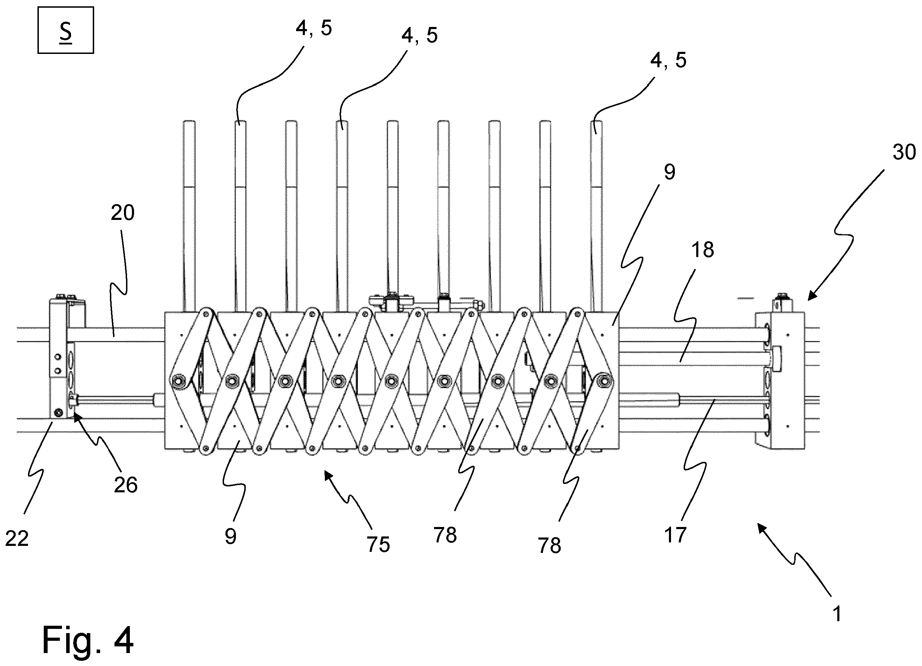

Entlang der Antriebswelle 2 bzw. in axialer Richtung ist jedes Zahnrad 14 jedoch nicht fest mit der Antriebswelle 2 verbunden sondern kann entlang der Antriebswelle 2 bewegt oder geschoben werden. Die axiale Bewegungsfreiheit des Zahnrades 14 ist vorliegend notwendig, um eine Gassenbreite, wie dies nachfolgend zu den Figuren 3 und 4 beschrieben wird, einstellen zu können, da hierbei die Schlitten 9 mit den Zahnrädern 14 und den Zahnstangen 5 entlang der Antriebswelle 2 verschoben werden.

Über den beschriebenen Verstellmechanismus 50 (vgl. Fig. 2), welcher vorliegend eine Antriebswelle 2, mehrere Stangen 4 bzw. Zahnstangen 5 sowie für jede dieser mehreren Zahnstangen 5 ein jeweiliges Zahnrad 14 umfasst, kann somit eine Höhenverstellung für Gassenwände vorgenommen werden. Bei der Verstelleinrichtung 1 werden der Steuerungseinrichtung S Informationen zu den Artikeln vorgegeben, die entlang einer Transportstrecke bewegt werden sollen. Die Steuerungseinrichtung S ist derart ausgebildet, dass diese mittels der Informationen Rückschlüsse ziehen kann, ob zur Bewegung der Artikel entlang der Transportstrecke Gassenwände vorgesehen sind oder die Bewegung der Artikel entlang der Transportstrecke ohne eine Führung über Gassenwände erfolgen soll. Sofern die Steuerungseinrichtung S hierbei feststellt, dass keine Gassenwände für die Bewegung von Artikeln entlang der Transportstrecke vorgesehen sind, kann die Steuerungseinrichtung S den Aktor 6 betätigen, wenn sich die Gassenwände in einer Arbeitsposition befinden, in welcher die Gassenwände Artikel führen sollen.

Der Aktor 6 dreht dann die Antriebswelle 2 in einer bestimmten Drehrichtung und bewirkt hierdurch eine Bewegung der Zahnstangen 5 in Richtung nach oben, wodurch die Gassenwände angehoben werden und in eine Speicherposition gelangen. In der Speicherposition verbleiben die Gassenwände, wenn Artikel entlang der Transportstrecke bewegt werden, wobei die Gassenbleche oder Gassenwände sich hierbei oberhalb der Artikel befinden und die Artikel zu keinem Zeitpunkt berühren. Die Zahnstangen 5 nehmen hierbei eine Position ein, wie sie in Figuren 1 und 2 dargestellt ist.

Werden der Steuerungseinrichtung S zu einem späteren Zeitpunkt weitere Informationen vorgegeben und zieht die Steuerungseinrichtung S sodann Rückschlüsse, dass nun Gassenwände zur Führung von Artikeln entlang der Transportstrecke benötigt werden, so wird der Aktor 6 erneut von der Steuerungseinrichtung S betätigt und dreht die Antriebswelle 2 in entgegengesetzter Drehrichtung. Hierdurch werden die Zahnstangen 5 in Richtung nach unten bewegt und die mit den Zahnstangen 5 verbundenen Gassenwände abgesenkt, bis sie eine Position erreichen, in welcher die Gassenwände Artikel in mehreren parallelen Reihen führen können. Die jeweilige Endlage bzw. SollPosition, welche die Gassenwände nach dem Absenken einnehmen sollen, ist der Steuerungseinrichtung S bekannt, so dass der Aktor 6 die Antriebswelle 2 mit einer bestimmten Anzahl an Umdrehungen rotierend bewegt.

Die beschriebene Verstelleinrichtung 1 eignet sich jedoch auch, um lediglich eine Position von Gassenwänden anzupassen, wenn die Gassenwände Artikel oder Getränkebehälter mit unterschiedlichen Höhen in parallelen Reihen führen sollen. So kann es beispielsweise sein, dass Artikel zunächst über Gassenwände in parallelen Reihen geführt sind. Werden der Steuerungseinrichtung S sodann Informationen vorgegeben, dass nun auf weitere Artikel gewechselt wird, die größer als bisherige Artikel ausgebildet sind, so kann die Steuerungseinrichtung S die Verstelleinrichtung 1 betätigen und hierbei die Gassenwände geringfügig anheben und in eine Position bringen, die auf das Führen dieser größeren Artikel abgestimmt ist.

Die Fig. 3 zeigt eine schematische sowie perspektivische Rückansicht der Ausführungsform einer erfindungsgemäßen Verstelleinrichtung 1 nach Figuren 1 und 2. Zusätzlich zur Antriebswelle 2, welche in Fig. 1 gezeigt wurde, sind in Figuren 3 und 4 eine zweite Antriebswelle 17 und eine dritte Antriebswelle 18 zu erkennen. Zwischen der zweiten und dritten Antriebswelle 17 und 18 und der ersten Antriebswelle 2 befindet sich eine Abdeckung 12 (vgl. auch Figuren 1 und 2), so dass die erste Antriebswelle 2 in Figuren 3 und 4 jeweils nicht zu erkennen ist.

Der auf Verweis mit Ziffer 7 in Fig. 3 dargestellte Aktor ist in der Lage, eine Drehbewegung auf die zweite Antriebswelle 17 zu übertragen. Die äußeren Schlitten 9 verfügen über ein Innengewinde. Die zweite Antriebswelle 17 greift über ein korrespondierendes Außengewinde in die Innengewinde der äußeren Schlitten 9. Einer der beiden Schlitten 9 verfügt über ein rechtsdrehendes Innengewinde, wohingegen ein weiterer der beiden Schlitten 9 ein linksdrehendes Innengewinde besitzt. Wird die Antriebswelle 17 über den Aktor 7 gedreht, so bewirkt dies, dass sich die äußeren Schlitten 9 in Abhängigkeit der Drehrichtung der Antriebswelle 17 entweder einander annähern oder sich voneinander entfernen.

Sämtlichen Schlitten 9 ist ein weiterer Verstellmechanismus 70 zugeordnet, der vorliegend einen Scherenmechanismus 75 umfasst. Der Scherenmechanismus 75 besteht seinerseits aus einer Vielzahl an gelenkig miteinander verbundenen Scherenhebeln 78. Wenn der Abstand der äußeren Schlitten 9 mittels einer Drehbewegung der Antriebswelle 17 zueinander vergrößert wird, wird der Abstand sämtlicher Schlitten 9 durch ihre Verbindung über den Scherenmechanismus 75 zueinander vergrößert.

Wenn der Abstand der äußeren Schlitten 9 mittels einer Drehbewegung der Antriebswelle 17 in umgekehrter Drehrichtung zueinander verkleinert wird, wird der Abstand sämtlicher Schlitten 9 durch ihre Verbindung über den Scherenmechanismus 75 zueinander verkleinert. Die Bewegung erfolgt jeweils entlang einer Längsrichtung der in Figuren 1 und 2 jeweils dargestellten Antriebswelle 2. Die Antriebswelle 2 erstreckt sich parallel zu zwei Führungsstangen 20 und 22, die gemeinsam eine Linearführung 25 für die Schlitten 9 ausbilden.

Zudem werden sämtliche Schlitten 9 bei einer Drehbewegung der Antriebswelle 17 zeitgleich zueinander entlang der Antriebswelle 2 bzw. entlang der Linearführung 25, welche durch die Führungsstangen 20 und 22 gebildet ist, verstellt. Die Vergrößerung und Verkleinerung des Abstandes erfolgt hierbei zudem derart, dass sämtliche unmittelbar benachbarten Schlitten 9 einen identischen Abstand besitzen.

Wie es vorhergehend bereits erwähnt wurde und in Fig. 2 gezeigt wird, ist jeder Zahnstange 5 ein eigener Schlitten 9 zugeordnet, über den die jeweilige Zahnstange 5 gehalten wird bzw. über den die jeweilige Zahnstange 5 in axialer Richtung beweglich gelagert wird. An jeder Zahnstange 5 ist zudem eine in den Figuren nicht mit dargestellte Gassenwand festgesetzt, von denen ein jeweiliges Paar an Gassenwänden eine jeweilige Gasse zur Führung von Artikeln ausbildet. Mit der Vergrößerung des relativen Abstandes der Schlitten 9 zueinander über den weiteren Verstellmechanismus 70 bzw. über den Scherenmechanismus 75 wird somit die relative Beabstandung benachbarter Gassenwände zueinander angepasst. Somit kann über den weiteren Verstellmechanismus 70 die Breite einer jeweiligen Gasse angepasst werden, in welcher Artikel bei einer Bewegung entlang einer Transportstrecke geführt werden sollen.

Aus einer Zusammenschau der Fig. 3 mit Fig. 2 wird zudem deutlich, dass ein jeweiliges Zahnrad 14, das in Eingriff mit einer jeweiligen Zahnstange 5 steht, fest mit einem jeweiligen Schlitten 9 verbunden ist. Wird ein jeweiliger Schlitten 9 bei einer Betätigung der zweiten Antriebswelle 17 entlang der Linearführung 25 bewegt, so wird zusammen mit dem Schlitten 9 auch das jeweilige Zahnrad 14 entlang der Linearführung verschoben. Das jeweilige Zahnrad 14 sitzt hierbei auf der Antriebswelle 2 auf und kann gleitend entlang der Antriebswelle 2 bewegt werden. Ein kämmender Eingriff zwischen dem jeweiligen Zahnrad 14 und der jeweiligen Zahnstange 5 bleibt während des Verschiebens entlang der Antriebswelle 2 erhalten.

Weiter ist eine dritte Antriebswelle 18 vorgesehen, die über den Aktor 8 drehend bewegt werden kann. Auch die dritte Antriebswelle 18 besitzt ein Außengewinde, das mit einem Innengewinde eines Schlittens 9 oder mehrerer Schlitten 9 in Eingriff steht. Das Innengewinde ist hierbei entweder rechtsdrehend oder linksdrehend. Bei einer drehenden Bewegung der dritten Antriebswelle 18 über den Aktor 7 können sämtliche Schlitten 9 gemeinsam entlang der Linearführung 25 hin und her verschoben werden, wobei der relative Abstand der Schlitten 9 hierbei unverändert bleibt. Hierdurch kann eine horizontale Position vorgegeben werden, an welcher sich eine jeweilige Gassenwand befindet, wenn Artikel entlang einer Transportstrecke bewegt werden.

Die Bezugsziffer 30 verweist zudem auf eine Stütze, welche die Führungsstangen 20 und 22 der Linearführung 25 zusätzlich trägt. Selbst wenn eine Vielzahl an Schlitten 9 vorgesehen ist, können diese stabil an der Linearführung 25 gehalten sein, wenn die Führungsstangen 20 und 22 zusätzlich über die Stütze 30 getragen werden. Wie es Fig. 2 erkennen lässt, ist die Stütze 30 an der Abdeckung 12 angeordnet. Durch die Stütze 30 erstrecken sich die zweite Antriebswelle 17 und die dritte Antriebswelle 18.

Die Fig. 4 zeigt einzelne weitere Details der Verstelleinrichtung 1 gemäß der Ausführungsform nach Figuren 1 bis 3. In Fig. 4 ist nochmals der Scherenmechanismus 75 zu erkennen, welcher aus einer Vielzahl an gelenkig miteinander verbundenen Scherenhebeln 78 besteht und sämtlichen Schlitten 9 zur Anpassung ihres relativen Abstandes zugeordnet ist. Auch zeigt die Darstellung der Fig. 4, dass sich die dritte Antriebswelle 18, bei deren drehender Bewegung sämtliche Schlitten 9 ohne eine Veränderung ihres relativen Abstandes entlang der Linearführung 25 bewegt werden, lediglich durch die beiden rechtsseitig dargestellten Schlitten 9 erstreckt und die weiteren Schlitten 9 nicht erreicht.

Die Bezugsziffer 26 verweist in Fig. 4 auf ein Lager für die zweite Antriebswelle 17, die zur Vergrößerung und Verkleinerung des relativen Abstandes der Schlitten 9 vorgesehen ist. In Fig. 4 ist nur ein Teil dieses Lagers 26 zu erkennen. Fig. 1 zeigt hierbei, dass ein weiterer Teil des Lagers 26 auf einer gegenüberliegenden Seite der Abdeckung 12 angeordnet ist und die Antriebswelle 2 drehbeweglich aufnimmt, bei deren Betätigung ein Absenken oder Anheben der Zahnstangen 5 erfolgt.

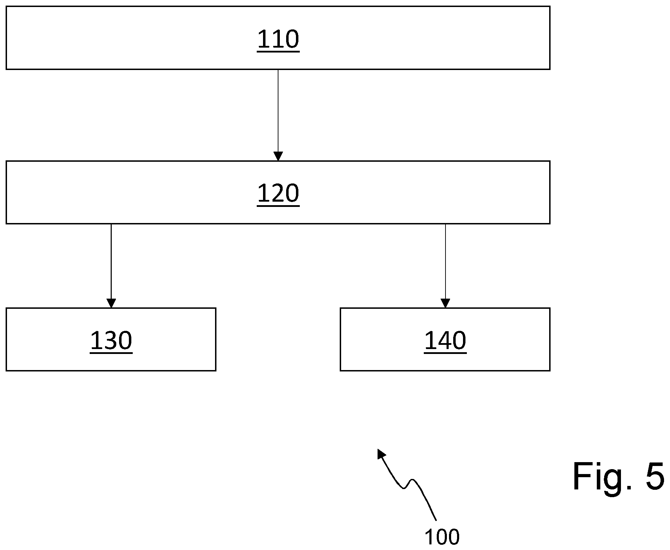

Die Fig. 5 zeigt im Flussdiagramm mehrere Schritte, wie sie einzeln oder gemäß der in Fig. 5 dargestellten Kombination und Reihenfolge bei diversen Ausführungsformen des erfindungsgemäßen Verfahrens 100 vorgesehen sein können.

Im Schritt 110 werden einer Steuerungseinrichtung S Informationen zu Artikeln vorgegeben, die entlang einer Transportstrecke bewegt werden sollen. Die Steuerungseinrichtung S überprüft diese Informationen und stellt im Schritt 120 fest, dass entweder Gassenwände in den Bereich einer Transportstrecke eingebracht werden müssen, so dass diese entlang der Transportstrecke bewegte Artikel führen können oder dass Gassenwände aus dem Bereich der Transportstrecke genommen werden müssen, so dass nachfolgend Artikel ohne eine Führung über Gassenwände entlang der Transportstrecke bewegt werden.

Auf den Schritt 120 folgend wird entweder der Schritt 130 oder der Schritt 140 durchgeführt. Stellt die Steuerungseinrichtung S im Schritt 120 fest, dass sich keine Gassenwände an einer Position befinden, bei welcher Gassenwände Artikel während einer Bewegung entlang der Transportstrecke führen und werden solche Gassenwände benötigt, wird der Schritt 130 durchgeführt. Die Steuerungseinrichtung S steuert im Schritt 130 einen Aktor 6 einer Verstelleinrichtung 1 an, der eine Antriebswelle 2 drehend antreibt, wodurch Zahnstangen 5 jeweils eine lineare Stellbewegung in Richtung nach unten ausführen. An den Zahnstangen 5 befinden sich die Gassenwände, die bei einer linearen Stellbewegung der Zahnstangen 5 abgesenkt werden und hierdurch aus einer Speicherposition in eine Position gelangen, in welcher sie Artikel während einer Bewegung entlang der Transportstrecke führen können.

Stellt die Steuerungseinrichtung S im Schritt 120 fest, dass sich bereits Gassenwände an einer Position befinden, bei welcher Gassenwände Artikel während einer Bewegung entlang der Transportstrecke führen und werden diese Gassenwände nicht benötigt, wird der Schritt 140 durchgeführt. Die Steuerungseinrichtung S steuert im Schritt 140 einen Aktor 6 einer Verstelleinrichtung 1 an, der eine Antriebswelle 2 drehend antreibt, wodurch Zahnstangen 5 jeweils eine lineare Stellbewegung in Richtung nach oben ausführen. An den Zahnstangen 5 befinden sich die Gassenwände, die bei einer solchen linearen Stellbewegung der Zahnstangen 5 angehoben werden und hierdurch in eine Speicherposition gelangen, in welcher sie Artikel während einer Bewegung entlang der Transportstrecke nicht führen können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verstelleinrichtung
- 2: Antriebswelle
- 3: Untersetzungsgetriebe
- 4: Stange
- 5: Zahnstange
- 6: erster Aktor
- 7: zweiter Aktor
- 8: dritter Aktor
- 9: Schlitten
- 12: Abdeckung
- 13: Befestigungsmittel
- 14: Zahnrad
- 15: Verzahnung
- 16: Verschlussdeckel
- 17: zweite Antriebswelle
- 18: dritte Antriebswelle
- 20: Führungsstange
- 22: Führungsstange
- 25: Linearführung
- 26: Lager
- 30: Stütze
- 50: Verstellmechanismus
- 70: weiterer Verstellmechanismus
- 75: Scherenmechanismus
- 78: Scherenhebel
- S: Steuerungseinrichtung

## Patentansprüche

1. Transportstrecke mit mehreren Gassen zur jeweiligen Führung von Artikeln, von denen eine jeweilige Gasse durch zwei im Wesentlichen parallel verlaufende Gassenwände gebildet ist, wobei die Transportstrecke mindestens eine Verstelleinrichtung (1) für Gassenwände umfasst, die zur Führung von Artikeln ausgebildet sind, wobei die mindestens eine Verstelleinrichtung (1) einen Verstellmechanismus (50) besitzt, wobei der jeweilige Verstellmechanismus (50) zum wahlweisen Übertragen einer Hebe- oder Senkbewegung auf mindestens eine der Gassenwände betätigbar ist und welche Transportstrecke
eine Steuerungseinrichtung (S) umfasst, welcher Informationen zu unterschiedlichen Betriebsmodi vorgebbar sind, von denen ein erster Betriebsmodus eine Führung von Artikeln in mehreren Gassen vorsieht und ein zweiter Betriebsmodus eine gassenlose Bewegung von Artikeln definiert und bei welcher Transportstrecke die Steuerungseinrichtung (S) derart ausgebildet ist, dass
a) die Steuerungseinrichtung (S) bei einer Vorgabe des ersten Betriebsmodus einen Aktor (6) zum Übertragen einer Senkbewegung über die mindestens eine Verstelleinrichtung (1) auf die mindestens eine Gassenwand ansteuern kann, so dass Artikel bei einer Bewegung entlang der Transportstrecke über die mindestens eine Gassenwand geführt werden und wobei die Steuerungseinrichtung (S)
b) bei einer Vorgabe des zweiten Betriebsmodus den Aktor zum Übertragen einer Hebebewegung über die mindestens eine Verstelleinrichtung (1) auf die mindestens eine Gassenwand ansteuern kann, so dass die mindestens eine Gassenwand in eine Speicherposition gelangt, in welcher sie sich ohne eine Führung von Artikeln oberhalb der jeweiligen Artikel befindet, wenn die jeweiligen Artikel entlang der Transportstrecke bewegt werden.

2. Transportstrecke nach Anspruch 1, wobei der Verstellmechanismus (50) zum wahlweisen Übertragen der Hebe- oder Senkbewegung
- wenigstens eine Stange (4) aufweist, die mit der mindestens einen Gassenwand verbunden ist sowie
- eine Antriebswelle (2), welche mit der wenigstens einen Stange (4) derart mechanisch zusammenwirkt, dass die wenigstens eine Stange (4) bei einer drehenden Bewegung der Antriebswelle (2) entlang ihrer Längsachse versetzt wird.

3. Transportstrecke nach Anspruch 2, wobei die mindestens eine Verstelleinrichtung (1) einen weiteren Verstellmechanismus (70) und mehrere Stangen (4) aufweist, wobei eine relative Beabstandung der mehreren Stangen (4) entlang einer Längsrichtung der Antriebswelle (2) durch eine Betätigung des weiteren Verstellmechanismus (70) anpassbar ist.

4. Transportstrecke nach Anspruch 2 und 3, bei welcher die mehreren Stangen (4) durch mehrere Zahnstangen (5) ausgebildet sind und wobei die mindestens eine Verstelleinrichtung (1) mehrere drehfest auf der Antriebswelle (2) aufsitzende Zahnräder (14) umfasst, wobei ein jeweiliges Zahnrad (14) eine korrespondierende Gegenverzahnung ausbildet, mit welcher das jeweilige Zahnrad (14) mit einer zugeordneten Zahnstange (5) kämmend in Eingriff steht und wobei die mehreren Zahnräder (14) derart auf der Antriebswelle (2) aufsitzen, dass die mehreren Zahnräder (14) bei einem Anpassen der relativen Beabstandung der mehreren Zahnstangen (5) zusammen mit den mehreren Zahnstangen (5) entlang der Längsrichtung der Antriebswelle (2) bewegbar sind.

5. Transportstrecke nach Anspruch 4, wobei die mindestens eine Verstelleinrichtung (1) mehrere Schlitten (9) umfasst, wobei über einen jeweiligen Schlitten (9) eine jeweilige Zahnstange (5) und ein jeweiliges Zahnrad (14) gehalten werden und bei welcher die mindestens eine Verstelleinrichtung (1) eine Linearführung (25), entlang welcher die mehreren Schlitten (9) mittels einer Betätigung des weiteren Verstellmechanismus (70) verschiebbar sind, umfasst.

6. Transportstrecke nach einem der Ansprüche 1 bis 5, welche mindestens zwei Verstelleinrichtungen (1) für Gassenwände umfasst, die zur Führung von Artikeln ausgebildet sind, wobei die mindestens zwei Verstelleinrichtungen (1) jeweils einen Verstellmechanismus (50) besitzen, wobei der jeweilige Verstellmechanismus (50) zum wahlweisen Übertragen einer Hebe- oder Senkbewegung auf mindestens eine Gassenwand betätigbar ist und wobei die mindestens zwei Verstelleinrichtungen (1) mit einer jeweiligen Gassenwand zusammenwirken, so dass die Verstellmechanismen (50) der mindestens zwei Verstelleinrichtungen (1) zum wahlweisen Übertragen einer Hebe- oder Senkbewegung auf die jeweilige Gassenwand gemeinsam betätigbar sind.

7. Verfahren (100) zum Umgang mit mindestens einer zur Führung von Artikeln vorgesehenen Gasse, wobei zum Umgang mit der Gasse ein Verstellmechanismus (50) einer Verstelleinrichtung (1) betätigt wird, woraus resultierend wenigstens eine Gassenwand der mindestens einen Gasse wahlweise angehoben oder abgesenkt wird und wobei die wenigstens eine Gassenwand als Bestandteil einer Transportstrecke ausgebildet ist, **dadurch gekennzeichnet, dass**
- die Transportstrecke aus einem ersten Betriebsmodus in einen zweiten Betriebsmodus wechselt, wozu die wenigstens eine Gassenwand über den Verstellmechanismus (50) der Verstelleinrichtung (1) angehoben wird, worauf folgend Artikel entlang der Transportstrecke bewegt werden und die Gassenwand sich hierbei ohne Führung der Artikel oberhalb der Artikel befindet, worauf folgend
- die Transportstrecke aus dem zweiten Betriebsmodus in den ersten Betriebsmodus zurückwechselt, wozu die wenigstens eine Gassenwand über den Verstellmechanismus (50) der Verstelleinrichtung (1) abgesenkt wird, worauf folgend Artikel entlang der Transportstrecke bewegt und hierbei über die wenigstens eine abgesenkte Gassenwand geführt werden.

8. Verfahren nach Anspruch 7, bei welchem der Verstellmechanismus (50) wenigstens eine Stange (4) umfasst, welche mit der wenigstens einen Gassenwand verbunden ist sowie eine Antriebswelle (2), die gedreht wird und mit der wenigstens einen Stange (4) mechanisch zusammenwirkt, so dass in Abhängigkeit der jeweiligen Drehrichtung die wenigstens eine Gassenwand über die wenigstens eine Stange (4) entweder angehoben oder abgesenkt wird.

9. Verfahren nach Anspruch 7 oder Anspruch 8, bei dem der Verstellmechanismus (50) mehrere Stangen (4) besitzt, von denen eine jeweilige Stange (50) mit einer eigenen Gassenwand verbunden ist und bei welchem die Verstelleinrichtung (1) einen weiteren Verstellmechanismus (70) ausbildet, der betätigt wird, wodurch eine relative Beabstandung der mehreren Stangen (50) sowie der mit den mehreren Stangen (4) verbundenen Gassenwände entlang einer Längsrichtung der Antriebswelle (2) wahlweise verkleinert oder vergrößert wird.

10. Verfahren nach einem der Ansprüche 7 bis 9, bei welchem die mehreren Stangen (4) durch mehrere Zahnstangen (5) ausgebildet sind und bei welchem mehrere Zahnräder (14) vorgesehen sind, die drehfest auf der Antriebswelle (2) aufsitzen und jeweils eine Gegenverzahnung ausbilden, die mit einer Verzahnung (15) einer dem jeweiligen Zahnrad (14) zugeordneten Zahnstange (5) kämmend in Eingriff steht und bei welchem Verfahren die mehreren Zahnräder (14) bei einer Anpassung der relativen Beabstandung der mehreren Zahnstangen (5) sowie der mit den mehreren Zahnstangen (5) verbundenen Gassenwände zusammen mit den mehreren Zahnstangen (5) und den mit den mehreren Zahnstangen (5) verbundenen Gassenwänden entlang der Längsrichtung der Antriebswelle (2) verschoben werden.

11. Verwendung einer Verstelleinrichtung (1) für einen Artikelzulauf, für den in einem ersten Betriebsmodus eine Bewegung von Artikeln ohne eine Führung über Gassenwände und in einem zweiten Betriebsmodus eine Bewegung von Artikeln unter Führung über Gassenwände vorgesehen ist, wobei die Verstelleinrichtung (1) einen Verstellmechanismus (50) umfasst, der zum wahlweisen Übertragen einer Hebe- oder Senkbewegung auf mindestens eine Gassenwand betätigbar ist, wobei die Gassenwand durch die Hebebewegung auf ein Höhenniveau gebracht wird, bei dem sich die mindestens eine Gassenwand ausschließlich oberhalb von Artikeln befindet, wenn Artikel entlang des Transportabschnittes bewegt werden.

## Claims

1. A conveyor section with a plurality of lanes, each for guiding articles, wherein each lane is formed by two lane walls running substantially parallel, wherein the conveyor section comprises at least one adjustment device (1) for lane walls that are designed to guide articles, wherein the at least one adjustment device (1) has an adjustment mechanism (50), wherein the particular adjustment mechanism (50) is actuable to selectively transmit a lifting movement or lowering movement to at least one of the lane walls, and which conveyor section
comprises a control device (S) to which information on different operating modes is specifiable, of which a first operating mode provides a guiding of articles in a plurality of lanes, and a second operating mode defines a lane-free movement of articles, and in which conveyor section the control device (S) is designed such that,
a) with the first operating mode being specified, the control device (S) can control an actuator (6) to transmit a lowering movement to the at least one lane wall via the at least one adjustment device (1) such that articles are guided via the at least one lane wall during a movement along the conveyor section, and wherein,
b) with the second operating mode being specified, the control device (S) can control the actuator to transmit a lifting movement to the at least one lane wall via the at least one adjustment device (1) such that the at least one lane wall reaches a storage position in which the lane wall is located above the articles without guiding the particular articles while the particular articles are being moved along the conveyor section.

2. The conveyor section according to claim 1, wherein, in order to selectively transmit the lifting or lowering movement, the adjustment mechanism (50) has
- at least one bar (4) connected to the at least one lane wall, and
- a drive shaft (2) that interacts mechanically with the at least one bar (4) in such a manner that the at least one bar (4) is displaced along its longitudinal axis during a rotating movement of the drive shaft (2).

3. The conveyor section according to claim 2, wherein the at least one adjustment device (1) has a further adjustment mechanism (70) and a plurality of bars (4), wherein a relative spacing of the plurality of bars (4) along a longitudinal direction of the drive shaft (2) is adjustable by an actuation of the further adjustment mechanism (70).

4. The conveyor section according to claim 2 and 3, in which the plurality of bars (4) are formed by a plurality of toothed racks (5), and wherein the at least one adjustment device (1) comprises a plurality of toothed wheels (14) seated non-rotatably on the drive shaft (2), wherein a particular toothed wheel (14) forms a corresponding counter toothing via which the particular toothed wheel (14) is in intermeshing engagement with a toothed rack (5) assigned to it, and wherein the plurality of toothed wheels (14) are seated on the drive shaft (2) in such a manner that the plurality of toothed wheels (14) are movable along the longitudinal direction of the drive shaft (2) together with the plurality of toothed racks (5) when the relative spacing of the plurality of toothed racks (5) is being adjusted.

5. The conveyor section according to claim 4, wherein the at least one adjustment device (1) comprises a plurality of slides (9), wherein a particular toothed rack (5) and a particular toothed wheel (14) are held via a particular slide (9), and in which the at least one adjustment device (1) comprises a linear guide (25) along which the plurality of slides (9) are shiftable by means of an actuation of the further adjustment mechanism (70).

6. The conveyor section according to one of the claims 1 to 5, which comprises at least two adjustment devices (1) for lane walls designed to guide articles, wherein the at least two adjustment devices (1) each have an adjustment mechanism (50), wherein the particular adjustment mechanism (50) is actuable to selectively transmit a lifting movement or lowering movement to at least one lane wall, and wherein the at least two adjustment devices (1) interact with a particular lane wall such that the adjustment mechanisms (50) of the at least two adjustment devices (1) are actuable together to selectively transmit a lifting movement or lowering movement to the particular lane wall.

7. A method (100) for handling at least one lane provided to guide articles, wherein an adjustment mechanism (50) of an adjustment device (1) is actuated to handle the lane, with the result that at least one lane wall of the at least one lane is selectively lifted or lowered, and wherein the at least one lane wall is formed as part of a conveyor section, the method being **characterised in that**
- the conveyor section changes from a first operating mode to a second operating mode, for which purpose the at least one lane wall is lifted up via the adjustment mechanism (50) of the adjustment device (1), whereupon articles are moved along the conveyor section, and the lane wall is in this context located above the articles without guiding the articles, whereupon
- the conveyor section changes from the second operating mode back to the first operating mode, for which purpose the at least one lane wall is lowered via the adjustment mechanism (50) of the adjustment device (1), whereupon articles are moved along the conveyor section and in this context guided via the at least one lowered lane wall.

8. The method according to claim 7, in which the adjustment mechanism (50) comprises at least one bar (4) connected to the at least one lane wall and also comprises a drive shaft (2), which is rotated and interacts mechanically with the at least one bar (4), such that the at least one lane wall is either lifted or lowered via the at least one bar (4) depending on the particular direction of rotation.

9. The method according to claim 7 or claim 8, in which the adjustment mechanism (50) has several bars (4), each particular bar (5) of which is connected to an own lane wall, and in which the adjustment device (1) forms a further adjustment mechanism (70) which is actuated, whereby a relative spacing of the plurality of bars (5) and of the lane walls connected to the plurality of bars (4) is selectively reduced or increased along a longitudinal direction of the drive shaft (2).

10. The method according to one of the claims 7 to 9, in which the plurality of bars (4) are formed by a plurality of toothed racks (5), and in which a plurality of toothed wheels (14) are provided seated non-rotatably on the drive shaft (2) and each forming a counter toothing in intermeshing engagement with a toothing (15) of a toothed rack (5) assigned to the particular toothed wheel (14), and in which method the plurality of toothed wheels (14) are shifted along the longitudinal direction of the drive shaft (2) together with the plurality of toothed racks (5) and with the lane walls connected to the plurality of toothed racks (5) when the relative spacing of the plurality of toothed racks (5) and of the lane walls connected to the plurality of toothed racks (5) is being adjusted.

11. A use of an adjustment device (1) for an article infeed for which a movement of articles without a guiding via lane walls is provided in a first operating mode, and a movement of articles with a guiding via lane walls is provided in a second operating mode, wherein the adjustment device (1) comprises an adjustment mechanism (50) which is actuable to selectively transmit a lifting movement or lowering movement to at least one lane wall, wherein the lane wall is brought to a height level by the lifting movement, at which height level the at least one lane wall is located exclusively above articles while articles are being moved along the transport section.

## Revendications

1. Section de transport comprenant une pluralité de voies destinées à guider respectivement des articles, dont une voie respective est formée par deux parois de voie s'étendant pour l'essentiel parallèlement, dans laquelle la section de transport comprend au moins un dispositif de réglage (1) pour des parois de voie qui sont configurées pour guider des articles, dans laquelle ledit au moins un dispositif de réglage (1) possède un mécanisme de réglage (50), ledit mécanisme de réglage (50) respectif étant apte à être actionné pour transmettre sélectivement un mouvement de levage ou d'abaissement à au moins l'une des parois de voie, et laquelle la section de transport
comprend un dispositif de commande (S) auquel peuvent être entrées des informations concernant différents modes de fonctionnement dont un premier mode de fonctionnement prévoit un guidage d'articles dans plusieurs voies, et un deuxième mode de fonctionnement définit un déplacement d'articles exempt de voie et dans laquelle section de transport ledit dispositif de commande (S) est configuré de telle sorte que
a) lorsque le premier mode de fonctionnement est prédéterminé, le dispositif de commande (S) peut commander un actionneur (6) pour transmettre un mouvement d'abaissement, via ledit au moins un dispositif de réglage (1), à ladite au moins une paroi de voie, de telle sorte que des articles soient guidés par ladite au moins une paroi de voie lors d'un déplacement le long de la section de transport, et dans laquelle le dispositif de commande (S)
b) lorsque le deuxième mode de fonctionnement est prédéterminé, il peut commander l'actionneur pour transmettre un mouvement de levage, via ledit au moins un dispositif de réglage (1), à ladite au moins une paroi de voie, de telle sorte que ladite au moins une paroi de voie atteint une position de stockage dans laquelle elle est située au-dessus des articles respectifs sans guider lesdits articles, lorsque les articles respectifs sont déplacés le long de la section de transport.

2. Section de transport selon la revendication 1, dans laquelle le mécanisme de réglage (50) destiné à transmettre sélectivement le mouvement de levage ou d'abaissement
- comprend au moins une tige (4) qui est reliée à ladite au moins une paroi de voie, ainsi qu'
- un arbre d'entraînement (2) qui agit de concert mécaniquement avec ladite au moins une tige (4) de telle manière que ladite au moins une tige (4) soit déplacée le long de son axe longitudinal lors d'un mouvement de rotation de l'arbre d'entraînement (2).

3. Section de transport selon la revendication 2, dans laquelle ledit au moins un dispositif de réglage (1) comprend un autre mécanisme de réglage (70) et une pluralité de tiges (4), dans laquelle un espacement relatif de la pluralité de tiges (4) le long d'une direction longitudinale de l'arbre d'entraînement (2) est adaptable par un actionnement dudit autre mécanisme de réglage (70).

4. Section de transport selon la revendication 2 et 3, dans laquelle la pluralité de tiges (4) est constituée par une pluralité de crémaillères (5), et dans laquelle ledit au moins un dispositif de réglage (1) comprend une pluralité de roues dentées (14) montées de manière solidaire en rotation sur l'arbre d'entraînement (2), dans laquelle une roue dentée respective (14) forme une contre-denture correspondante avec laquelle ladite roue dentée respective (14) est en prise à engrènement avec une crémaillère associée (5), et dans laquelle la pluralité de roues dentées (14) est montée sur l'arbre d'entraînement (2) de telle sorte que, lors d'une adaptation de l'espacement relatif de la pluralité de crémaillères (5), la pluralité de roues dentées (14) soit mobile conjointement avec la pluralité de crémaillères (5) le long de la direction longitudinale de l'arbre d'entraînement (2).

5. Section de transport selon la revendication 4, dans laquelle ledit au moins un dispositif de réglage (1) comprend une pluralité de chariots (9), une crémaillère respective (5) et une roue dentée respective (14) étant supportées par un chariot respectif (9), et dans laquelle ledit au moins un dispositif de réglage (1) comprend un guidage linéaire (25) le long duquel la pluralité de chariots (9) est déplaçable au moyen d'un actionnement de l'autre mécanisme de réglage (70).

6. Section de transport selon l'une quelconque des revendications 1 à 5, qui comprend au moins deux dispositifs de réglage (1) pour des parois de voie qui sont configurées pour guider des articles, dans laquelle lesdits au moins deux dispositifs de réglage (1) possèdent chacun un mécanisme de réglage (50), dans laquelle le mécanisme de réglage (50) respectif est actionnable pour transmettre sélectivement un mouvement de levage ou d'abaissement à au moins une paroi de voie, et dans laquelle lesdits au moins deux dispositifs de réglage (1) agissent de concert avec une paroi de voie respective de telle sorte que les mécanismes de réglage (50) desdits au moins deux dispositifs de réglage (1) soient actionnables conjointement pour transmettre sélectivement un mouvement de levage ou d'abaissement à la paroi de voie respective.

7. Procédé (100) pour le maniement d'au moins une voie destinée au guidage d'articles, dans lequel, pour le maniement de la voie, un mécanisme de réglage (50) d'un dispositif de réglage (1) est actionné, d'où résulte qu'au moins une paroi de voie de ladite au moins une voie est sélectivement relevée ou abaissée et dans lequel ladite au moins une paroi de voie est configurée en tant que composant d'une section de transport, **caractérisé par le fait que**
- la section de transport passe d'un premier mode de fonctionnement à un deuxième mode de fonctionnement, à cet effet ladite au moins une paroi de voie est relevée via le mécanisme de réglage (50) du dispositif de réglage (1), ce après quoi des articles sont déplacés le long de la section de transport, et la paroi de voie est située, lors de cela, au-dessus des articles sans guider les articles, ce après quoi
- la section de transport repasse du deuxième mode de fonctionnement au premier mode de fonctionnement, à cet effet ladite au moins une paroi de voie est abaissée via le mécanisme de réglage (50) du dispositif de réglage (1), ce après quoi des articles sont déplacés le long de la section de transport et sont guidés, lors de cela, par ladite au moins une paroi de voie abaissée.

8. Procédé selon la revendication 7, dans lequel le mécanisme de réglage (50) comprend au moins une tige (4) qui est reliée à ladite au moins une paroi de voie, ainsi qu'un arbre d'entraînement (2) qui est tourné et agit de concert mécaniquement avec ladite au moins une tige (4) de telle sorte que, en fonction de la direction de rotation respective, ladite au moins une paroi de voie est soit relevée, soit abaissée via ladite au moins une tige (4).

9. Procédé selon la revendication 7 ou la revendication 8, dans lequel le mécanisme de réglage (50) comprend une pluralité de tiges (4) dont une tige respective (5) est reliée à une propre paroi de voie, et dans lequel le dispositif de réglage (1) forme un autre mécanisme de réglage (70) qui est actionné, réduisant ou augmentant ainsi sélectivement un espacement relatif de la pluralité de tiges (5), ainsi que des parois de voie reliées à la pluralité de tiges (4), selon une direction longitudinale de l'arbre d'entraînement (2).

10. Procédé selon l'une quelconque des revendications 7 à 9, dans lequel la pluralité de tiges (4) est formée par une pluralité de crémaillères (5), et dans lequel une pluralité de roues dentées (14) est prévue, qui sont montés de manière solidaire en rotation sur l'arbre d'entraînement (2) et forment chacune une contre-denture qui est en prise à engrènement avec une denture (15) d'une crémaillère (5) associée à la roue dentée (14) respective, et dans lequel procédé, lors d'une adaptation de l'espacement relatif de la pluralité de crémaillères (5) ainsi que des parois de voie reliées à la pluralité de crémaillères (5), la pluralité de roues dentées (14) est déplacée conjointement avec la pluralité de crémaillères (5) et les parois de voie reliées à la pluralité de crémaillères (5), le long de la direction longitudinale de l'arbre d'entraînement (2).

11. Utilisation d'un dispositif de réglage (1) pour une alimentation en articles pour laquelle, dans un premier mode de fonctionnement, un déplacement d'articles est prévu sans un guidage par des parois de voie, et pour laquelle, dans un deuxième mode de fonctionnement, un déplacement d'articles est prévu avec un guidage par des parois de voie, dans laquelle le dispositif de réglage (1) comprend un mécanisme de réglage (50) qui peut être actionné pour transmettre sélectivement un mouvement de levage ou d'abaissement à au moins une paroi de voie, dans laquelle, au moyen du mouvement de levage, ladite paroi de voie est amenée à un niveau de hauteur auquel ladite au moins une paroi de voie est située exclusivement au-dessus d'articles lorsque des articles sont déplacés le long de la section de transport.
